# EUROPÄISCHE PATENTANMELDUNG

(11) **EP 2 020 532 A1**
(43) Veröffentlichungstag der Anmeldung: **04.02.2009**
(21) Anmeldenummer: 07113530.5
(22) Anmeldetag: 31.07.2007
(51) Int. Cl.: F16H 3/00

(54) **Getriebevorrichtung für ein Kraftfahrzeug und Verfahren zum Steuern einer Getriebevorrichtung eines Kraftfahrzeugs**

(71) Anmelder: NAF Neunkirchener Achsenfabrik AG, 91077 Neunkirchen (DE)
(72) Erfinder: Sauer, Ralf, 91077 Neunkirchen (DE)
(74) Vertreter: Hofstetter, Alfons J.

(57) **Zusammenfassung**

Die Erfindung betrifft eine Getriebevorrichtung (10) für ein Kraftfahrzeug, insbesondere für eine selbstfahrende Arbeitsmaschine, mit einer Antriebswelle (12), welche mit einem Hydromotor des Kraftfahrzeugs koppelbar ist, und mit einer Abtriebswelle (14), mittels welcher zumindest eine Achse (16) des Kraftfahrzeugs antreibbar ist, wobei die Antriebswelle (12) und die Abtriebswelle (14) in einer ersten Fahrstufe (Schaltstellung P1) über zumindest eine erste Zahnradpaarung (18) und in einer zweiten Fahrstufe (Schaltstellung P2) über zumindest eine zweite Zahnradpaarung (20) miteinander gekoppelt sind, wobei die erste Zahnradpaarung (18) eine gerade Anzahl von zumindest zwei Zahnrädern (18a, 18b) und die zweite Zahnradpaarung (20) eine ungerade Anzahl von zumindest drei Zahnrädern (20a, 20b, 20c) umfasst, wobei wenigstens eine Trenneinrichtung vorgesehen ist, mittels welcher in Abhängigkeit der Fahrstufe (Schaltstellung P1, P2) die erste oder die zweite Zahnradpaarung (18, 20) von der Antriebswelle (12) und/oder der Abtriebswelle (14) entkoppelbar ist. Die Erfindung betrifft weiterhin ein Kraftfahrzeug sowie ein Verfahren zum Steuern einer Getriebevorrichtung (10).

## Beschreibung

Die Erfindung betrifft eine Getriebevorrichtung für ein Kraftfahrzeug, insbesondere für eine selbstfahrende Arbeitsmaschine, ein Kraftfahrzeug mit einer Getriebevorrichtung sowie ein Verfahren zum Steuern einer zwischen zumindest einer ersten und einer zweiten Fahrstufe schaltbaren Getriebevorrichtung eines Kraftfahrzeugs.

Derartige Getriebevorrichtungen, welche mit einem Hydraulikmotor eines Kraftfahrzeugs koppelbar sind und eine Übersetzung des Drehmoments und der Drehzahl des Hydraulikmotors ermöglichen, sind aus dem Stand der Technik in großer Vielzahl bekannt. So offenbart beispielsweise die DE 93 18 792 U1 eine Getriebevorrichtung mit einer Antriebswelle, welche mit einem Hydromotor eines Kraftfahrzeugs koppelbar ist, und mit einer Abtriebswelle, mittels welcher zumindest eine Achse des Kraftfahrzeugs antreibbar ist, wobei die Antriebswelle und die Abtriebswelle in einer ersten Fahrstufe über zumindest eine erste Zahnradpaarung und in einer zweiten Fahrstufe über zumindest eine zweite Zahnradpaarung miteinander gekoppelt sind, so dass sich entsprechend unterschiedliche Übersetzungsverhältnisse ergeben.

Als nachteilig an den bekannten Getriebevorrichtungen ist jedoch der Umstand anzusehen, dass diese entweder nur bei stehendem Kraftfahrzeug zwischen den beiden Fahrstufen geschaltet werden können, oder dass konstruktiv aufwändige und teure Lamellenkupplungen benötigt werden, um ein Schalten der Getriebevorrichtung auch bei fahrendem Kraftfahrzeug zu erlauben.

Aufgabe der vorliegenden Erfindung ist es daher, eine Getriebevorrichtung der eingangs genannten Art zu schaffen, welche kostengünstiger herstellbar ist und ein Schalten zwischen den Fahrstufen auch bei bewegtem Kraftfahrzeug ermöglicht. Eine weitere Aufgabe der Erfindung ist es, ein Kraftfahrzeug mit einer Getriebevorrichtung sowie ein Verfahren zum Steuern einer Getriebevorrichtung zu schaffen, welche ebenfalls eine Senkung der Herstellungskosten sowie eine Schaltbarkeit der Getriebevorrichtung während der Fahrt ermöglichen.

Die Aufgabe wird erfindungsgemäß durch eine Getriebevorrichtung für ein Kraftfahrzeug mit den Merkmalen des Patentanspruchs 1, ein Kraftfahrzeug mit einer Getriebevorrichtung mit den Merkmalen des Patentanspruchs 12 sowie durch ein Verfahren zum Steuern einer zwischen zumindest einer ersten und einer zweiten Fahrstufe schaltbaren Getriebevorrichtung eines Kraftfahrzeugs mit den Merkmalen des Patentanspruchs 13 gelöst. Vorteilhafte Ausgestaltungen mit zweckmäßigen Weiterbildungen der Erfindung sind in den jeweiligen Unteransprüchen angegeben.

Eine Getriebevorrichtung, welche kostengünstiger herstellbar ist und ein Schalten zwischen den Fahrstufen auch bei bewegtem Kraftfahrzeug ermöglicht, ist erfindungsgemäß dadurch geschaffen, dass die erste Zahnradpaarung eine gerade Anzahl von zumindest zwei Zahnrädern und die zweite Zahnradpaarung eine ungerade Anzahl von zumindest drei Zahnrädern umfasst, wobei wenigstens eine Trenneinrichtung vorgesehen ist, mittels welcher in Abhängigkeit der Fahrstufe die erste oder die zweite Zahnradpaarung von der Antriebswelle und/oder der Abtriebswelle entkoppelbar ist. Mit Hilfe einer derartigen Getriebevorrichtung ist es im Gegensatz zum Stand der Technik möglich, sich die spezifischen Vorteile von Hydromotoren zu Nutze zu machen, welche insbesondere die Möglichkeit einer sehr schnellen Drehrichtungswechsels umfassen. Durch die unterschiedlichen Paritäten der ersten und der zweiten Zahnradpaarungen kann das Schalten zwischen der ersten und der zweiten Fahrstufe somit durch einfache Umkehrung der Drehrichtung des Hydromotors bzw. der Antriebswelle erfolgen. Dabei stellt die Trenneinrichtung sicher, dass die Antriebswelle in Abhängigkeit der jeweiligen Fahrstufe nur über eine der beiden Zahnradpaarungen mit der Abtriebswelle gekoppelt ist, so dass sich die beiden Zahnradpaarungen nicht gegenseitig behindern können und eine Beschädigung der Getriebevorrichtung zuverlässig verhindert wird. Dabei besitzen die beiden Zahnradpaarungen vorzugsweise unterschiedliche Übersetzungsverhältnisse, so dass beispielsweise die erste Fahrstufe zur Langsamfahrt mit hohem Drehmoment und die zweite Fahrstufe zur Erhöhung der Maximalgeschwindigkeit verwendet werden kann. Alternativ oder zusätzlich kann vorgesehen sein, dass eine Fahrstufe durch Umkehrung der Drehrichtung der Antriebswelle bzw. des Hydromotor sowohl als Vorwärts- als auch als Rückwärtsgang verwendet werden kann, so dass ohne zusätzliche konstruktive Maßnahmen an der Getriebevorrichtung eine weitere Fahrstufe realisierbar ist. Die Getriebevorrichtung kann somit konstruktiv einfach, bauraumsparend und kostengünstig hergestellt werden und besitzt zudem ein sehr geringes Gewicht.

In einer vorteilhaften Ausgestaltung der Erfindung ist vorgesehen, dass die Trenneinrichtung eine erste, der ersten Zahnradpaarung zugeordnete Freilaufeinrichtung und eine zweite, der zweiten Zahnradpaarung zugeordnete Freilaufeinrichtung umfasst, wobei die erste und die zweite Freilaufeinrichtung derart angeordnet sind, dass die Antriebswelle in Abhängigkeit ihrer Drehrichtung über die erste oder die zweite Zahnradpaarung mit der Abtriebswelle koppelbar ist. Die somit in unterschiedlicher Drehrichtung sperrenden bzw. freigebenden Freilaufeinrichtungen stellen eine kostengünstige, robuste und gewichtsparende Möglichkeit dar, um die Antriebswelle in Abhängigkeit ihrer Drehrichtung bzw. bei wechselnden Lastverhältnissen mit einer der beiden Zahnradpaarungen zu koppeln bzw. zu entkoppeln. Bei der Verwendung von Klemmkörper- oder Klemmrollenfreilaufeinrichtungen kann zudem eine vorteilhafte Geräuschsenkung während des Betriebs der Getriebevorrichtung erzielt werden.

In einer weiteren vorteilhaften Ausgestaltung der Erfindung ist vorgesehen, dass die Antriebswelle zumindest eine erste und eine zweite Teilantriebswelle umfasst, wobei die erste Zahnradpaarung der ersten Teilantriebswelle und die zweite Zahnradpaarung der zweiten Teilantriebswelle zugeordnet sind. Eine derart zweigeteilte Antriebswelle ermöglicht dabei auf konstruktiv einfache Weise eine zusätzliche Erhöhung der Freiheitsgrade der Getriebevorrichtung und kann zur einfachen Entkopplung der der Antriebswelle zugeordneten Zahnräder der beiden Zahnradpaarungen verwendet werden.

Weitere Vorteile ergeben sich, indem eine Kupplungseinrichtung vorgesehen ist, welche zumindest zwischen einer ersten, die erste und die zweite Teilantriebswelle entkoppelnden Schaltstellung und einer zweiten, die erste und die zweite Teilantriebswelle koppelnden Schaltstellung schaltbar ist. Dies erlaubt ein gezieltes Koppeln bzw. Entkoppeln der beiden Teilantriebswellen, wodurch beispielsweise Schaltvorgänge zwischen der ersten und der zweiten Fahrstufe verbessert und unerwünschte Verwindungen im Antriebsstrang verhindert werden können.

Dabei hat es sich in Kombination mit den genannten Freilaufeinrichtungen als vorteilhaft gezeigt, dass bei in die erste Schaltstellung geschalteter Kupplungseinrichtung die erste Freilaufeinrichtung überbrückt und die erste Teilantriebswelle mit der ersten Zahnradpaarung gekoppelt ist. In dieser ersten Schaltstellung sind demnach die beiden Teilantriebswellen voneinander entkoppelt, so dass das Drehmoment des Hydromotors mit einer durch die erste Zahnradpaarung bestimmten Übersetzung auf die Abtriebswelle übertragen werden kann.

In einer weiteren vorteilhaften Ausgestaltung der Erfindung hat es sich in Kombination mit den genannten Freilaufeinrichtungen als vorteilhaft gezeigt, dass bei in die zweite Schaltstellung geschalteter Kupplungseinrichtung die zweite Freilaufeinrichtung überbrückt ist, die zweite Teilantriebswelle mit der zweiten Zahnradpaarung gekoppelt ist und die erste und die zweite Teilantriebswelle miteinander gekoppelt sind. Die erste Freilaufeinrichtung ist damit wirksam und entkoppelt die erste Zahnradpaarung von der ersten Teilantriebswelle, wodurch das Drehmoment des Hydromotors mit einer durch die zweite Zahnradpaarung bestimmten Übersetzung auf die Abtriebswelle übertragen werden kann, ohne dass es zu einer gegenseitigen Behinderung der beiden Zahnradpaarungen kommt.

In einer weiteren vorteilhaften Ausgestaltung der Erfindung hat es sich in Kombination mit den genannten Freilaufeinrichtungen als vorteilhaft gezeigt, dass die Kupplungseinrichtung zusätzlich in eine dritte Schaltstellung schaltbar ist, in welcher die erste und die zweite Freilaufeinrichtung freigegeben und die erste und die zweite Teilantriebswelle miteinander gekoppelt sind. In der dritten Schaltstellung sperrt in einer Drehrichtung des Hydromotors bzw. der ersten Teilantriebswelle die erste Freilaufeinrichtung, wodurch der Antrieb über die erste Zahnradpaarung erfolgt. Gleichzeitig ist die zweite Zahnradpaarung mittels der zweiten Freilaufeinrichtung von der zweiten Teilantriebswelle entkoppelt. Bei einer Umkehr der Drehrichtung des Hydromotors bzw. der Teilantriebswellen ist hingegen die erste Zahnradpaarung mittels der ersten Freilaufeinrichtung von der ersten Teilantriebswelle entkoppelt und der Abtrieb erfolgt aufgrund der jetzt sperrenden zweiten Freilaufeinrichtung über die zweite Zahnradpaarung auf die Abtriebswelle. Die dritte Schaltstellung kann dabei als Zwischenschaltstellung beim Schalten zwischen der ersten und der zweiten Schaltstellung vorgesehen sein.

Um eine einfache Angleichung der Drehzahlen der ersten und der zweiten Teilantriebswelle zu ermöglichen, hat es sich in weiterer Ausgestaltung der Erfindung als vorteilhaft gezeigt, dass die Kupplungseinrichtung eine Synchronisierungseinrichtung umfasst. Durch Angleichen der Drehzahlen wird sowohl eine Reduzierung des Verschleißes beider Teilantriebswellen als auch eine vorteilhafte Geräuschminderung beim Schalten zwischen den Schaltstufen gewährleistet. Die Kupplungseinrichtung kann beispielsweise ein aus dem Kraftfahrzeugbau bekanntes Zweifachkonus-Synchronisierungssystem umfassen. Alternativ kann vorgesehen sein, dass die Kupplungseinrichtung als Fliehkraftkupplung ausgebildet ist und bei angeglichenen Drehzahlen von erster und zweiter Teilantriebswelle selbstständig einen Kraftschluss herstellt. Umgekehrt kann bei entsprechend großen Drehzahlunterschieden zwischen erster und zweiter Teilantriebswelle eine automatische Entkopplung erfolgen, um unerwünschte Verwindungen des Antriebsstrangs der Getriebevorrichtung zu verhindern.

In weiterer Ausgestaltung der Erfindung hat es sich als vorteilhaft gezeigt, dass der Kupplungseinrichtung eine Steuerungseinrichtung zugeordnet ist, mittels welcher die Kupplungseinrichtung zwischen den Schaltstellungen schaltbar ist. Durch eine derartige Steuerungseinrichtung wird eine zuverlässige Synchronisierung der beteiligten Organe und damit möglichst präzise, geräuschlose und schnelle Schaltvorgänge sichergestellt. Mittels der Steuerungseinrichtung kann dabei in Abhängigkeit der Ausgestaltung der Kupplungseinrichtung zwischen der ersten und der zweiten sowie gegebenenfalls der dritten Schaltstellung geschaltet werden. Dabei können grundsätzlich hydraulische, pneumatische, magnetische oder elektrische Steuerungseinrichtungen vorgesehen sein. Weiterhin erlaubt eine derartige Steuerungseinrichtung eine "shift-by-wire" Funktionalität der Kupplungseinrichtung, wodurch zwischen einem Schalthebel des Kraftfahrzeugs und der Kupplungseinrichtung keine mechanischen Übertragungselemente benötigt werden. Neben einer entsprechenden Gewichtssenkung kann die Getriebevorrichtung dadurch flexibler am Kraftfahrzeug angeordnet werden.

Eine weitere Verbesserung der Schaltvorgänge zwischen den einzelnen Schaltstellungen ist erfindungsgemäß dadurch ermöglicht, dass die Steuerungseinrichtung mit einer Motorsteuerung des Kraftfahrzeugs koppelbar ist und ausgelegt ist, die Kupplungseinrichtung in Abhängigkeit einer Drehzahl der Abtriebswelle und/oder einer Fahrgeschwindigkeit des Kraftfahrzeugs und/oder eines Schaltwunsches eines Fahrers des Kraftfahrzeugs zu steuern. Durch Einbeziehen eines oder mehrerer der genannten Betriebsparameter des Kraftfahrzeugs kann die Getriebevorrichtung als Teil- oder Vollautomatikgetriebe ausgebildet und eine weitere Verbesserung der Schaltvorgänge gewährleistet werden. Zusätzlich können in Abhängigkeit der Ausgestaltung des Kraftwagens auch Steigungsinformationen, Beschleunigungswerte oder dergleichen berücksichtigt werden. Die Kopplung zwischen Steuerungseinrichtung und Motorsteuerung kann dabei beispielsweise direkt oder über ein Bussystem erfolgen.

Eine zusätzliche Verbesserung der Schaltvorgänge wird erfindungsgemäß dadurch erzielt, dass die Steuerungseinrichtung mit der Motorsteuerung des Kraftfahrzeugs koppelbar ist und ausgelegt ist, ein eine geforderte Drehzahl und/oder ein gefordertes Drehmoment und/oder eine geforderte Drehrichtung des Hydromotors bzw. einer Hydraulikpumpe des Hydromotors charakterisierendes Steuersignal an die Motorsteuerung zu übermitteln. Dies ermöglicht eine gezielte Steuerung des Hydromotors bzw. seiner zugeordneten Hydraulikpumpe in Abhängigkeit des Betriebszustands der Getriebevorrichtung bzw. der Kupplungseinrichtung, so dass die Steuerungseinrichtung und die Motorsteuerung vorteilhaft als Regelsystem ausgebildet werden können.

Ein weiterer Aspekt der Erfindung betrifft ein Kraftfahrzeug, insbesondere eine selbstfahrende Arbeitsmaschine, mit einer Getriebevorrichtung, wobei erfindungsgemäß vorgesehen ist, dass die Getriebevorrichtung gemäß einem der vorhergehenden Ausführungsbeispiele ausgebildet ist. Die sich daraus ergebenden Vorteile sind bereits aus den jeweiligen Vorteilsbeschreibungen zu entnehmen, wobei vorteilhafte Ausgestaltungen der Getriebevorrichtung - soweit anwendbar - als vorteilhafte Ausgestaltungen des Kraftfahrzeugs und umgekehrt anzusehen sind.

Ein weiterer Aspekt der Erfindung betrifft ein Verfahren zum Steuern einer zwischen zumindest einer ersten und einer zweiten Fahrstufe schaltbaren Getriebevorrichtung eines Kraftfahrzeugs, wobei erfindungsgemäß vorgesehen ist, dass eine Drehrichtung der Antriebswelle beim Schalten zwischen der ersten und der zweiten Fahrstufe umgekehrt wird, dass als erste Zahnradpaarung eine Zahnradpaarung mit einer geraden Anzahl von zumindest zwei Zahnrädern und als zweite Zahnradpaarung eine Zahnradpaarung mit einer ungeraden Anzahl von zumindest drei Zahnrädern verwendet wird und dass wenigstens eine Trenneinrichtung verwendet wird, mittels welcher in Abhängigkeit der Fahrstufe die erste oder die zweite Zahnradpaarung von der Antriebswelle und/oder der Abtriebswelle entkoppelt wird. Das erfindungsgemäße Verfahren erlaubt aufgrund der unterschiedlichen Paritäten der beiden Zahnradpaarungen eine vorteilhafte Ausnutzung der Eigenschaften von Hydromotoren, welche insbesondere eine schnelle Drehrichtungsumkehrung umfassen, und ermöglicht somit neben einer Senkung des Gewichts und der Herstellungskosten des Kraftfahrzeugs ein schnelles Schalten der Getriebevorrichtung sowohl bei stehendem als auch bei bewegtem Kraftfahrzeug. Dabei hat es sich insbesondere als vorteilhaft gezeigt, dass eine Getriebevorrichtung gemäß einem der vorhergehenden Beispiele verwendet wird. Die sich daraus ergebenden Vorteile sind bereits aus den jeweiligen Vorteilsbeschreibungen zu entnehmen, wobei vorteilhafte Ausgestaltungen der Getriebevorrichtung bzw. des Kraftfahrzeugs - soweit anwendbar - als vorteilhafte Ausgestaltungen des Verfahrens und umgekehrt anzusehen sind.

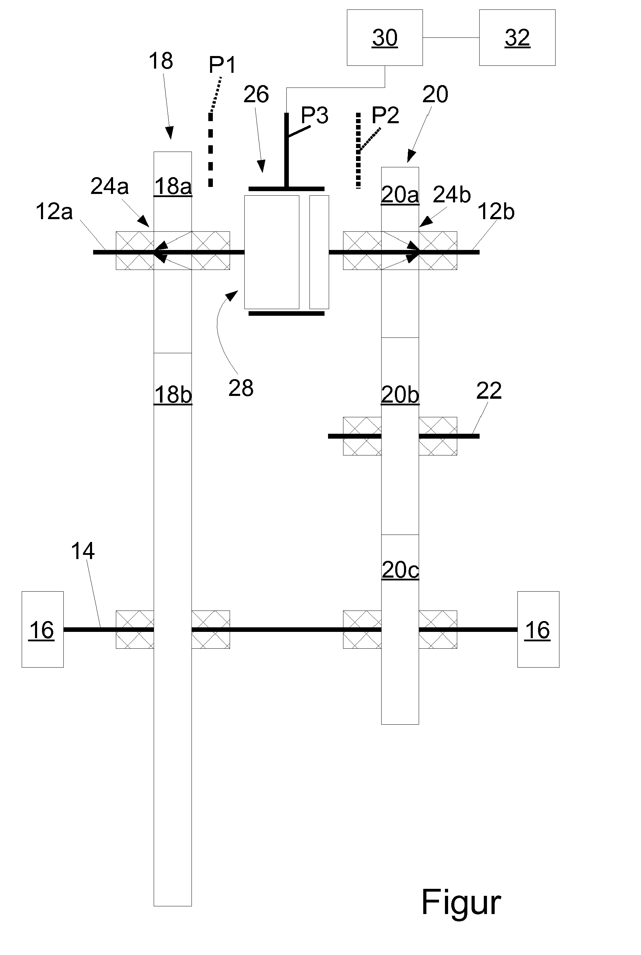

Weitere Vorteile, Merkmale und Einzelheiten der Erfindung ergeben sich aus der nachfolgenden Beschreibung eines Ausführungsbeispiels sowie anhand der Zeichnung, in welcher gleiche oder funktionsgleiche Elemente mit identischen Bezugszeichen versehen sind. Dabei zeigt die einzige Figur eine schematische Prinzipdarstellung einer Getriebevorrichtung für ein Kraftfahrzeug gemäß einem Ausführungsbeispiel.

Die Figur zeigt eine schematische Prinzipdarstellung einer Getriebevorrichtung 10 für ein als selbstfahrende Arbeitsmaschine ausgebildetes Kraftfahrzeug gemäß einem Ausführungsbeispiel. Die Getriebevorrichtung 10 umfasst dabei eine Antriebswelle 12, welche mit einem Hydromotor (nicht abgebildet) des Kraftfahrzeugs gekoppelt ist, sowie eine Abtriebswelle 14, mittels welcher eine Achse 16 des Kraftfahrzeugs antreibbar ist. Die Antriebswelle 12 ist dabei zweigeteilt und besteht aus einer ersten und einer zweiten Teilantriebswelle 12a, 12b. Die erste Teilantriebswelle 12a und die Abtriebswelle 16 sind über eine erste Zahnradpaarung 18, die zweite Teilantriebswelle 12b und die Abtriebswelle 16 über eine zweite Zahnradpaarung 20 miteinander gekoppelt. Die erste Zahnradpaarung 18 umfasst dabei eine geradzahlige Anzahl an Zahnrädern 18a, 18b, wodurch sich eine erste Fahrstufe mit einer Übersetzung aus dem Zähnezahlverhältnis von 18b/18a ergibt. Demgegenüber umfasst die zweite Zahnradpaarung 20 eine ungeradzahlige Anzahl an Zahnrädern 20a, 20b, 20c, wobei das mittlere Zahnrad 20b auf einer zusätzlichen Zwischenwelle 22 gelagert ist. Die daraus resultierende zweite Fahrstufe besitzt demnach eine Übersetzung, welche sich aus dem Zähnezahlverhältnis von 20c/20a ergibt. Dabei ist zu betonen, dass auch Zahnradpaarungen 18, 20 mit einer abweichenden Anzahl von Zahnrädern bzw. eine entsprechend abweichende Anzahl an Zwischenwellen vorgesehen sein können, wobei die Zahnradpaarungen 18, 20 jedoch immer voneinander verschiedene Paritäten aufweisen müssen. Dem Zahnrad 18a ist eine erste Freilaufeinrichtung 24a zugeordnet, mittels welcher die erste Zahnradpaarung 18 in Abhängigkeit einer Drehrichtung der ersten Teilantriebswelle 12a von dieser entkoppelbar ist. Entsprechend ist dem Zahnrad 20a eine zweite Freilaufeinrichtung 24b zugeordnet, mittels welcher die zweite Zahnradpaarung 20 von der zweiten Teilantriebswelle 12a entkoppelbar ist, wobei die erste und die zweite Freilaufeinrichtung 24a, 24b in jeweils unterschiedlichen Drehrichtungen der Teilantriebswellen 12a, 12b sperren bzw. freilaufen.

Die Getriebevorrichtung 10 umfasst weiterhin eine Kupplungseinrichtung 26, welche zwischen drei Schaltstellungen P1, P2 und P3 schaltbar ist. Die Kupplungseinrichtung 26 ist dabei vorliegend in der dritten Schaltstellung P3 gezeigt, in welcher die erste und die zweite Freilaufeinrichtung 24a, 24b freigegeben und die erste und die zweite Teilantriebswelle 12a, 12b miteinander gekoppelt sind. In der gestrichelt gezeigten ersten Schaltstellung P1 überbrückt die Kupplungseinrichtung 26 die erste Freilaufeinrichtung 24a, wodurch die erste Teilantriebswelle 12a drehfest mit der ersten Zahnradpaarung 18 gekoppelt ist. Die erste und die zweite Teilantriebswelle 12a, 12b sind in der Schaltstellung P1 nicht miteinander gekoppelt. In der zweiten, gepunktet dargestellten Schaltstellung P2 überbrückt die Kupplungseinrichtung 26 die zweite Freilaufeinrichtung 24b und koppelt die zweite Teilantriebswelle 12b drehfest mit der zweiten Zahnradpaarung 20. Zusätzlich koppelt die Kupplungseinrichtung 26 in der Schaltstellung P2 die erste und die zweite Teilantriebswelle 12a, 12b miteinander, wohingegen die erste Freilaufeinrichtung 24a nicht überbrückt wird und somit wirksam bleibt.

Die Kupplungseinrichtung 26 umfasst weiterhin eine Synchronisierungseinrichtung 28, mittels welcher eine Drehzahl der ersten Teilantriebswelle 12a an eine Drehzahl der zweiten Teilantriebswelle 12b anpassbar ist. Durch die Synchronisierungseinrichtung 28 kann somit ein erhöhter Verschleiß der Teilantriebswellen 12a, 12b verhindert und zudem die Geräuschentwicklung entsprechend gesenkt werden. Darüber hinaus werden durch das Angleichen der Drehzahlen unerwünschte Verwindungen im Antriebsstrang vermieden. Die Synchronisierungseinrichtung 28 kann dabei beispielsweise als Zweifachkonus-Synchronisierungssystem ausgebildet sein. Grundsätzlich sind dem Stand der Technik jedoch verschiedene Synchronisierungssysteme zu entnehmen, welche sich zur Anpassung der Drehzahlen der ersten und zweiten Teilantriebswelle 12a, 12b eignen. Der Kupplungseinrichtung 26 ist darüber hinaus eine elektrohydraulische Steuerungseinrichtung 30 zugeordnet, mittels welcher die Kupplungseinrichtung 26 zwischen den drei Schaltstellungen P1, P2 und P3 schaltbar ist. Die Steuerungseinrichtung 30 ist ihrerseits zum Austauschen von Steuersignalen mit einer Motorsteuerung 32 des Kraftfahrzeugs gekoppelt. Die auszutauschenden Steuersignale können dabei beispielsweise die momentane Drehzahl der Abtriebswelle 14, die derzeitige Fahrgeschwindigkeit des Kraftfahrzeugs, einen Schaltwunsch eines Fahrers sowie eine geforderte Drehzahl, ein gefordertes Drehmoment oder eine geforderte Drehrichtung des Hydromotors bzw. einer Hydraulikpumpe des Hydromotors charakterisieren. Dadurch wird eine optimale Steuerbarkeit der Schaltvorgänge zwischen den drei Schaltstellungen P1, P2 und P3 gewährleistet.

Die Funktionsweise der Getriebevorrichtung 10 wird im Folgenden näher erläutert werden. In der ersten Schaltstellung P1 treibt der Hydromotor die erste Teilantriebswelle 12a an. Da das Zahnrad 18a mittels der Kupplungseinrichtung 26 drehfest mit der ersten Teilantriebswelle 12a gekoppelt ist, wird das Drehmoment des Hydromotors somit über die Zahnradpaarung 18 auf die Abtriebswelle 14 übertragen. Beim Schalten aus der ersten Schaltstellung P1 in die zweite Schaltstellung P2 rückt zunächst die Kupplungseinrichtung 26 in die dritte Schaltstellung P3. Dabei werden die beiden Teilantriebswellen 12a, 12b mittels der Synchronisierungseinrichtung 28 auf gleiche Drehzahlen gebracht. In der dritten Schaltstellung P3 sperrt die erste Freilaufeinrichtung 24a, wodurch der Antrieb des Kraftfahrzeugs weiterhin über die erste Zahnradpaarung 18 erfolgt. Die zweite Freilaufeinrichtung 24b läuft in dieser Drehrichtung der zweiten Teilantriebswelle 12b frei, so dass sich die beiden Zahnradpaarungen 18, 20 nicht gegenseitig behindern. In dieser Schaltstellung P3 wird nun mittels der Motorsteuerung 32 die Drehrichtung des Hydromotors umgekehrt, wobei ein üblicher Zeitbedarf für diese Drehrichtungsumkehr im Bereich von etwa 0,5 Sekunden liegt. Dadurch schaltet die erste Freilaufeinrichtung 24a frei und die zweite Freilaufeinrichtung 24b beginnt zu sperren, sobald der Hydromotor die Drehzahl der zweiten Teilantriebswelle 12b erreicht. Beim Erreichen der geforderten Drehzahl wird die Kupplungseinrichtung 26 mittels der Steuerungseinrichtung 30 in die Schaltstellung P2 geschaltet, wodurch die beiden Teilantriebswellen 12a, 12b bzw. das Zahnrad 20a und die zweite Teilantriebswelle 12b drehfest miteinander gekoppelt werden. Die erste Freilaufeinrichtung 24a läuft demgegenüber frei, so dass sich die erste und die zweite Zahnradpaarung 18, 20 nicht blockieren.

Das Zurückschalten aus der zweiten Schaltstellung P2 in die erste Schaltstellung P1 erfolgt in umgekehrter Reihenfolge, so dass zunächst die Kupplungseinrichtung 26 in die dritte Schaltstellung P3 geschaltet, die Drehrichtung des Hydromotors umgekehrt und beim Sperren der ersten Freilaufeinrichtung 24a die Kupplungseinrichtung 26 weiter in die erste Schaltstellung P1 geschaltet wird.

Eine dritte Fahrstufe, welche als Rückwärtsgang ausgebildet ist, bedient sich der ersten Schaltstellung P1, indem wiederum die Drehrichtung des Hydromotors umgekehrt wird. Dadurch sperrt zwar die zweite Freilaufeinrichtung 24b, aufgrund der Entkopplung der beiden Teilantriebswellen 12a, 12b findet jedoch keine gegenseitige Behinderung der beiden Zahnradpaarungen 18, 20 statt.

## Patentansprüche

1. Getriebevorrichtung (10) für ein Kraftfahrzeug, insbesondere für eine selbstfahrende Arbeitsmaschine, mit einer Antriebswelle (12), welche mit einem Hydromotor des Kraftfahrzeugs koppelbar ist, und mit einer Abtriebswelle (14), mittels welcher zumindest eine Achse (16) des Kraftfahrzeugs antreibbar ist, wobei die Antriebswelle (12) und die Abtriebswelle (14) in einer ersten Fahrstufe (Schaltstellung P1) über zumindest eine erste Zahnradpaarung (18) und in einer zweiten Fahrstufe (Schaltstellung P2) über zumindest eine zweite Zahnradpaarung (20) miteinander gekoppelt sind,
**dadurch gekennzeichnet,**
**dass** die erste Zahnradpaarung (18) eine gerade Anzahl von zumindest zwei Zahnrädern (18a, 18b) und die zweite Zahnradpaarung (20) eine ungerade Anzahl von zumindest drei Zahnrädern (20a, 20b, 20c) umfasst, wobei wenigstens eine Trenneinrichtung vorgesehen ist, mittels welcher in Abhängigkeit der Fahrstufe (Schaltstellung P1, P2) die erste oder die zweite Zahnradpaarung (18, 20) von der Antriebswelle (12) und/oder der Abtriebswelle (14) entkoppelbar ist.

2. Getriebevorrichtung (10) nach Anspruch 1,
**dadurch gekennzeichnet,**
**dass** die Trenneinrichtung eine erste, der ersten Zahnradpaarung (18) zugeordnete Freilaufeinrichtung (24a) und eine zweite, der zweiten Zahnradpaarung (20) zugeordnete Freilaufeinrichtung (24b) umfasst, wobei die erste und die zweite Freilaufeinrichtung (24a, 24b) derart angeordnet sind, dass die Antriebswelle (12) in Abhängigkeit ihrer Drehrichtung über die erste oder die zweite Zahnradpaarung (18, 20) mit der Abtriebswelle (14) koppelbar ist.

3. Getriebevorrichtung (10) nach Anspruch 1 oder 2,
**dadurch gekennzeichnet,**
**dass** die Antriebswelle (12) zumindest eine erste und eine zweite Teilantriebswelle (12a, 12b) umfasst, wobei die erste Zahnradpaarung (18) der ersten Teilantriebswelle (12a) und die zweite Zahnradpaarung (20) der zweiten Teilantriebswelle (12b) zugeordnet ist.

4. Getriebevorrichtung (10) nach Anspruch 3,
**dadurch gekennzeichnet,**
**dass** eine Kupplungseinrichtung (26) vorgesehen ist, welche zumindest zwischen einer ersten, die erste und die zweite Teilantriebswelle (12a, 12b) entkoppelnden Schaltstellung (P1) und einer zweiten, die erste und die zweite Teilantriebswelle (12a, 12b) koppelnden Schaltstellung (P2) schaltbar ist.

5. Getriebevorrichtung (10) nach Anspruch 2 und 4,
**dadurch gekennzeichnet,**
**dass** bei in die erste Schaltstellung (P1) geschalteter Kupplungseinrichtung (26) die erste Freilaufeinrichtung (24a) überbrückt und die erste Teilantriebswelle (12a) mit der ersten Zahnradpaarung (18) gekoppelt ist.

6. Getriebevorrichtung (10) nach Anspruch 2 und 4 oder 5,
**dadurch gekennzeichnet,**
**dass** bei in die zweite Schaltstellung (P2) geschalteter Kupplungseinrichtung (26) die zweite Freilaufeinrichtung (24b) überbrückt ist, die zweite Teilantriebswelle (12b) mit der zweiten Zahnradpaarung (20) gekoppelt ist und die erste und die zweite Teilantriebswelle (12a, 12b) miteinander gekoppelt sind.

7. Getriebevorrichtung (10) nach Anspruch 2 und 4 oder 5 oder 6,
**dadurch gekennzeichnet,**
**dass** die Kupplungseinrichtung (26) zusätzlich in eine dritte Schaltstellung (P3) schaltbar ist, in welcher die erste und die zweite Freilaufeinrichtung (24a, 24b) freigegeben und die erste und die zweite Teilantriebswelle (12a, 12b) miteinander gekoppelt sind.

8. Getriebevorrichtung (10) nach einem der Ansprüche 4 bis 7,
**dadurch gekennzeichnet,**
**dass** die Kupplungseinrichtung (26) eine Synchronisierungseinrichtung (28) umfasst, mittels welcher eine Drehzahl der ersten Teilantriebswelle (12a) an eine Drehzahl der zweiten Teilantriebswelle (12b) anpassbar ist.

9. Getriebevorrichtung (10) nach einem der Ansprüche 4 bis 8,
**dadurch gekennzeichnet,**
**dass** der Kupplungseinrichtung (26) eine Steuerungseinrichtung (30) zugeordnet ist, mittels welcher die Kupplungseinrichtung (26) zwischen den Schaltstellungen (P1, P2, P3) schaltbar ist.

10. Getriebevorrichtung (10) nach Anspruch 9,
**dadurch gekennzeichnet,**
**dass** die Steuerungseinrichtung (30) mit einer Motorsteuerung (32) des Kraftfahrzeugs koppelbar ist und ausgelegt ist, die Kupplungseinrichtung (26) in Abhängigkeit einer Drehzahl der Abtriebswelle (14) und/oder einer Fahrgeschwindigkeit des Kraftfahrzeugs und/oder eines Schaltwunsches eines Fahrers des Kraftfahrzeugs zu steuern.

11. Getriebevorrichtung (10) nach Anspruch 9 oder 10,
**dadurch gekennzeichnet,**
**dass** die Steuerungseinrichtung (30) mit der Motorsteuerung (32) des Kraftfahrzeugs koppelbar ist und ausgelegt ist, ein eine geforderte Drehzahl und/oder ein gefordertes Drehmoment und/oder eine geforderte Drehrichtung des Hydromotors bzw. einer Hydraulikpumpe des Hydromotors charakterisierendes Steuersignal an die Motorsteuerung (32) zu übermitteln.

12. Kraftfahrzeug, insbesondere selbstfahrende Arbeitsmaschine, mit einer Getriebevorrichtung (10), welche eine mit einem Hydromotor des Kraftfahrzeugs gekoppelte Antriebswelle (12) sowie eine Abtriebswelle (14) umfasst, mittels welcher zumindest eine Achse (16) des Kraftfahrzeugs antreibbar ist, wobei die Antriebswelle (12) und die Abtriebswelle (16) in einer ersten Fahrstufe (Schaltstellung P1) über zumindest eine erste Zahnradpaarung (18) und in einer zweiten Fahrstufe (Schaltstellung P2) über zumindest eine zweite Zahnradpaarung (20) miteinander gekoppelt sind,
**dadurch gekennzeichnet,**
**dass** die Getriebevorrichtung (10) gemäß einem der Ansprüche 1 bis 11 ausgebildet ist.

13. Verfahren zum Steuern einer zwischen zumindest einer ersten und einer zweiten Fahrstufe (Schaltstellung P1, P2) schaltbaren Getriebevorrichtung (10) eines Kraftfahrzeugs, welche eine mit einem Hydromotor des Kraftfahrzeugs gekoppelte Antriebswelle (12) sowie eine Abtriebswelle (14) umfasst, mittels welcher zumindest eine Achse (16) des Kraftfahrzeugs antreibbar ist, wobei die Antriebswelle (12) und die Abtriebswelle (14) in einer ersten Fahrstufe (Schaltstellung P1) über zumindest eine erste Zahnradpaarung (18) und in einer zweiten Fahrstufe (Schaltstellung P2) über zumindest eine zweite Zahnradpaarung (20) miteinander gekoppelt werden,
**dadurch gekennzeichnet,**
**dass** eine Drehrichtung der Antriebswelle (12) beim Schalten zwischen der ersten und der zweiten Fahrstufe (Schaltstellung P1, P2) umgekehrt wird, wobei als erste Zahnradpaarung (18) eine Zahnradpaarung mit einer geraden Anzahl von zumindest zwei Zahnrädern (18a, 18b) und als zweite Zahnradpaarung (20) eine Zahnradpaarung mit einer ungeraden Anzahl von zumindest drei Zahnrädern (20a, 20b, 20c) verwendet wird und wobei wenigstens eine Trenneinrichtung (Freilaufeinrichtung 24a, 24b) verwendet wird, mittels welcher in Abhängigkeit der Fahrstufe (Schaltstellung P1, P2) die erste oder die zweite Zahnradpaarung (18, 20) von der Antriebswelle (12) und/oder der Abtriebswelle (14) entkoppelt wird.

14. Verfahren nach Anspruch 13,
**dadurch gekennzeichnet,**
**dass** eine Getriebevorrichtung (10) gemäß einem der Ansprüche 1 bis 11 verwendet wird.
